# EUROPÄISCHE PATENTSCHRIFT

(11) **EP 3 306 277 B1**
(45) Veröffentlichungstag und Bekanntmachung des Hinweises auf die Patenterteilung: **16.06.2021**
(21) Anmeldenummer: 17190918.7
(22) Anmeldetag: 13.09.2017
(51) Int. Cl.: G01F 1/84, G01F 5/00

(54) **CORIOLIS-MASSEDURCHFLUSSMESSGERÄT**
CORIOLIS MASS FLOW METER
DÉBITMÈTRE À EFFET CORIOLIS

(30) Priorität: 23.09.2016 DE 102016118016
(43) Veröffentlichungstag der Anmeldung: 11.04.2018
(73) Patentinhaber: Krohne AG, 4019 Basel (CH)
(72) Erfinder: Rolph, Christoper, Northants, NN72HA (GB); Fawcett, Trevor, Guisborough, TS14 8DQ (GB)
(74) Vertreter: Gesthuysen Patentanwälte

(56) Entgegenhaltungen:
- DE-U1-202014 102 258
- US-A- 5 297 426
- US-A1- 2015 027 236

## Beschreibung

Die Erfindung geht aus von einem Coriolis-Massedurchflussmessgerät mit einer Flanschverbindung zur Anbindung an eine externe Rohrleitung, mit wenigstens einem Schwingungserzeuger, mit wenigstens zwei Schwingungsaufnehmern, mit wenigstens zwei Messrohren, mit wenigstens einem Strömungsteiler, wobei der Strömungsteiler in Strömungsrichtung vor den wenigstens zwei Messrohren angeordnet ist, und mit wenigstens einem Strömungssammler, wobei der Strömungssammler in Strömungsrichtung hinter den wenigstens zwei Messrohren angeordnet ist.

Aus dem Stand der Technik ist es bekannt, unter Ausnutzung des Corioliseffekts den Massedurchfluss eines Fluids durch eine Rohrleitung zu bestimmen. Dazu wird das von dem Fluid durchströmte Messrohr durch einen Schwingungserzeuger in Schwingung versetzt. Die Schwingung des Messrohrs wird in Strömungsrichtung gesehen ein- und auslaufseitig durch am Messrohr angebrachte Schwingungsaufnehmer erfasst. Der Corioliseffekt bewirkt nun, dass einlaufseitig das Fluid verzögert wird, sodass ein Phasenunterschied zwischen der einlaufseitigen und auslaufseitigen Schwingung des Messrohrs messbar ist. Dieser Phasenunterschied ist proportional zu dem Massestrom des Fluids.

Bekannt sind Coriolis-Massedurchflussmessgeräte in unterschiedlichen Ausgestaltungen. Neben der Verwendung eines einzelnen geraden Messrohrs sind auch Ausgestaltungen basierend auf einer Doppelrohranordnung oder auf einem oder mehreren gebogenen Messrohren bekannt.

Spezielle Anwendungen der Durchflussmessung stellen häufig hohe Anforderungen an die Durchflussmessgeräte. Messgeräte, die ein hohes Fassungsvermögen bereitstellen und/oder unter hohem Druck und/oder bei hohen Temperaturen arbeiten, weisen insgesamt einen hohen Installationsumfang, insbesondere aufgrund der großen Länge der Messrohre auf.

Aus der Druckschrift DE 10 2008 002 217 A1 ist ein Coriolis-Durchflussmessgerät bekannt, wobei das Messrohr durch eine Trenneinheit in zwei Teilmessrohre unterteilt ist, wobei der Durchfluss durch beide Teilmessrohre gemessen wird. Dies hat den Vorteil, dass auch bei einem Anschluss an Rohrleitungen mit großem Durchmesser ein Druckabfall beim Übergang von der Rohrleitung auf das Messrohr im Wesentlichen vermieden werden kann, da der Rohrleitungsquerschnitt erhalten bleibt.

Aus der Druckschrift US 9,080,908 B2 ist ein Coriolis-Durchflussmessgerät zum Anschluss an eine externe Rohrleitung mit großem Durchmesser bekannt, wobei der Durchmesser des Messrohrs dem Durchmesser der externen Rohrleitung entspricht und wobei innerhalb des Messrohrs ein weiteres Messrohr mit geringerem Durchmesser angeordnet ist. Die Durchflussmessung wird lediglich an dem inneren Messrohr durchgeführt. Mit Hilfe eines Umrechnungsparameters wird der Gesamtdurchfluss des Fluids, das durch das Durchflussmessgerät fließt, bestimmt. Nachteilig an dieser Ausgestaltung ist, dass aufgrund der mechanischen Schwingungen des inneren Rohres der Durchfluss durch das äußere Messrohr gestört wird.

Aus der Druckschrift US 2015/027236 A1 ist ein Coriolis-Massedurchflussmessgerät mit einem aktiven Messrohr, das in einem größeren Rohr realisiert ist, bekannt.

Ausgehend von diesem Stand der Technik liegt der vorliegenden Erfindung die Aufgabe zugrunde, ein Coriolis-Massedurchflussmessgerät anzugeben, das einen besonders niedrigen Installationsaufwand und eine besonders niedrige Installationslänge aufweist.

Gemäß einer ersten Lehre der vorliegenden Erfindung wird die zuvor dargelegte Aufgabe durch ein eingangs genanntes Coriolis-Massedurchflussmessgerät dadurch gelöst, dass wenigstens ein aktives Messrohr und wenigstens ein passives Messrohr vorhanden sind, wobei das wenigstens eine aktive Messrohr und das wenigstens eine passive Messrohr getrennt voneinander ausgestaltet und angeordnet sind und dass der wenigstens eine Schwingungserzeuger und die wenigstens zwei Schwingungsaufnehmer am aktiven Messrohr angeordnet sind.

Erfindungsgemäß wurde erkannt, dass die Installationslänge und damit der Installationsaufwand dadurch minimiert bzw. vereinfacht werden kann, dass das Coriolis-Massedurchflussmessgerät derart ausgestaltet ist, dass das zu vermessende Fluid innerhalb des Durchflussmessgeräts in wenigstens zwei unabhängige Teilströme aufgeteilt wird, wobei der Durchfluss von lediglich einem oder auch mehreren Teilströmen bestimmt wird. Dies hat den Vorteil, dass die Durchflussmessung an einem Messrohr mit geringem Durchmesser und kurzer Rohrlänge durchgeführt werden kann. Insbesondere wenn die externe Rohrleitung einen großen Durchmesser aufweist, kann die Baulänge des gesamten Durchflussmessgeräts dadurch erheblich verringert werden. Darüber hinaus beeinflussen sich die einzelnen Teilströme aufgrund der separaten Ausgestaltung der aktiven und passiven Messrohre nicht.

Erfindungsgemäß ist wenigstens ein aktives Messrohr und wenigstens ein passives Messrohr vorhanden, wobei die Durchflussmessung im Bereich des wenigstens einen aktiven Messrohrs durchgeführt wird. Sind mehrere aktive Messrohre vorhanden, so wird an jedem aktiven Messrohr eine Durchflussmessung durchgeführt. Demnach umfasst das Coriolis-Massedurchflussmessgerät wenigstens einen Schwingungserzeuger und wenigstens zwei Schwingungsaufnehmer für jedes aktive Messrohr. Der durch das wenigstens eine passive Messrohr strömende Durchfluss wird nicht gemessen. Bei Kenntnis der Geometrie der aktiven und passiven Messrohre kann der Gesamtdurchfluss, der durch das Coriolis-Massedurchflussmessgerät fließt, mit Hilfe eines Umrechnungsfaktor bestimmt werden. Dabei berücksichtigt der Umrechnungsfaktor insbesondere die Geometrien des wenigstens einen aktiven und des wenigstens einen passiven Messrohrs.

Wenn hier von einem Coriolis-Massedurchflussmessgerät die Rede ist, dann ist damit gemeint, dass es sich um ein integrales Coriolis-Massedurchflussmessgerät handelt, das sich also vollständig zwischen seinen externen Anschlüssen erstreckt, also zwischen den beiden immer erforderlichen Teilen der Flanschverbindung, nämlich dem einströmseitigen Flansch und dem ausströmseitigen Flansch. Ein solches Coriolis-Massedurchflussmessgerät hat also in Durchströmungsrichtung betrachtet den Aufbau einströmseitiger Flansch, Strömungsteiler, aktive und passive Messrohre, Strömungssammler, ausströmseitiger Flansch. Der Strömungsteiler und der Strömungssammler sind Ausgangs- und Endpunkte der aktiven und passiven Messrohre, also aller Messrohre, insbesondere werden keine Strömungsteiler oder Strömungssammler hintereinandergeschaltet. Zu den hier betrachteten Coriolis-Massedurchflussmessgeräten gehören also nicht etwa Strömungskonstruktionen, in denen integrale Coriolis-Massedurchflussmessgeräte durch externe Strömungsteiler und entsprechende externe Rohrkonstruktionen parallel umströmt werden.

Gemäß einer ersten Ausgestaltung weisen das wenigstens eine aktive Messrohr und das wenigstens eine passive Messrohr die gleiche Länge auf. Die Umrechnung von dem gemessenen Teildurchfluss auf den Gesamtdurchfluss durch das Coriolis-Massedurchflussmessgerät ist gemäß dieser Ausgestaltung besonders einfach. Sind mehr als ein aktives Messrohr und/oder mehr als ein passives Messrohr vorhanden, so ist es vorteilhaft, wenn sämtliche aktiven und passiven Messrohre die gleiche Länge aufweisen.

Zudem ist es vorteilhaft, wenn die Anzahl der aktiven Messrohre der Anzahl der passiven Messrohre entspricht.

Gemäß einer alternativen Ausgestaltung sind mehr passive als aktive Messrohre vorhanden, beispielsweise entspricht die Anzahl der passiven Messrohre einem ganzzahligen Vielfachen der Anzahl der aktiven Messrohre.

Alternativ können ebenfalls mehr aktive Messrohre als passive Messrohre vorhanden sein. Besonders bevorzugt entspricht die Anzahl der aktiven Messrohre einem ganzzahligen Vielfachen der Anzahl der passiven Messrohre.

Typischerweise weisen vorteilhafte Ausgestaltungen zwei aktive Messrohre auf, insbesondere identisch ausgestaltete aktive Messrohre, sodass bei gegenphasiger Anregung der aktiven Messrohre der Masseschwerpunkt der Coriolis-Massedurchflussmessgeräts erhalten bleibt.

Die zuvor genannten Ausgestaltungen bezüglich der Anzahl der aktiven und passiven Messrohre weisen den Vorteil auf, dass eine Umrechnung von dem gemessenen Teildurchfluss auf den Gesamtdurchfluss durch das Coriolis-Massedurchflussmessgerät besonders einfach ist.

Eine besonders einfache Umrechnung auf den Gesamtdurchfluss ist ebenfalls möglich, wenn das wenigstens eine aktive Messrohr und das wenigstens eine passive Messrohr den gleichen Durchmesser aufweisen. Sind mehr als ein aktives Messrohr und/oder mehr als ein passives Messrohr vorhanden, so weisen gemäß dieser Ausgestaltung alle aktiven und passiven Messrohre den gleichen Durchmesser auf. Insbesondere wenn die aktiven Messrohre und die passiven Messrohre gleichzeitig auch dieselbe Länge aufweisen, ist die Umrechnung von dem Teildurchfluss auf den Gesamtdurchfluss besonders einfach.

Gemäß einer weiteren vorteilhaften Ausgestaltung weisen das wenigstens eine aktive Messrohr und das wenigstens eine passive Messrohr jeweils eine Querschnittsfläche auf, wobei die Querschnittsfläche des wenigstens einen aktiven Messrohrs identisch ist mit der Querschnittsfläche des wenigstens einen passiven Messrohrs. Sind mehr als ein aktives Messrohr und/oder mehr als ein passives Messrohr vorhanden, so sind vorzugsweise die Querschnittsflächen aller passiven und aktiven Messrohre identisch.

Wenn es heißt, dass die Querschnittsflächen identisch sind, so ist damit gemeint, dass sowohl die Form als auch die Größe, also der Flächeninhalt, der Querschnittsflächen identisch sind.

Alternativ kann die Form der Querschnittsfläche des wenigstens einen aktiven Messrohrs von der Form der Querschnittsfläche des wenigstens einen passiven Messrohrs verschieden sein. Gleichzeitig kann die Größe, also der Flächeninhalt, der Querschnittsfläche des wenigstens einen aktiven Messrohrs identisch oder verschieden sein mit bzw. von der Größe der Querschnitts fläche des wenigstens einen passiven Messrohrs.

Denkbar ist ebenfalls, dass die Form der Querschnittsfläche des wenigstens einen aktiven Messrohrs mit der Form der Querschnittsfläche des wenigstens einen passiven Messrohrs identisch ist, wobei jedoch die Größe der Querschnittsfläche des wenigstens einen aktiven Messrohrs verschieden ist von der Größe der Querschnittsfläche des wenigstens einen passiven Messrohrs

Gemäß einer weiteren Ausgestaltung sind wenigstens ein aktives Messrohr und wenigstens zwei passive Messrohre vorhanden, wobei jedes aktive Messrohr und jedes passive Messrohr eine Querschnittsfläche aufweisen, wobei die Summe der Querschnittsflächen des bzw. der aktiven Messrohre einen ersten Gesamtquerschnitt definiert und wobei die Summe der Querschnittsflächen der passiven Messrohre einen zweiten Gesamtquerschnitt definiert, wobei der zweite Gesamtquerschnitt einem ganzzahligen Vielfachen des ersten Gesamtquerschnitts entspricht.

Grundsätzlich kann die Querschnittsfläche des wenigstens einen aktiven Messrohrs und/oder die Querschnittsfläche des wenigstens einen passiven Messrohrs kreisförmig oder oval oder dreieckig oder viereckig ausgestaltet sein oder die Form eines Kreisausschnitts oder eines Kreissegments aufweisen.

Gemäß einer weiteren Ausgestaltung sind das wenigstens eine aktive Messrohr und das wenigstens eine passive Messrohr gerade oder gebogen, vorzugsweise u-förmig gebogen, ausgebildet. Dabei können das wenigstens eine aktive Messrohr und das wenigstens eine passive Messrohr die gleiche äußere Form aufweisen, das wenigstens eine aktive Messrohr und das wenigstens eine passive Messrohr können alternativ auch unterschiedliche Formen aufweisen.

Besonders bevorzugt ist das wenigstens eine aktive Messrohr gebogen, vorzugsweise u-förmig gebogen ausgestaltet und das wenigstens eine passive Messrohr ist gerade ausgestaltet.

Gemäß einer weiteren Ausgestaltung bildet das wenigstens eine aktive Messrohr eine Messrohranordnung. Diese Messrohranordnung kann beispielsweise ein gerades aktives Messrohr umfassen oder eine gerade Doppelrohranordnung oder ein, vorzugsweise u-förmig, gebogenes Messrohr oder eine, vorzugsweise u-förmig, gebogene Doppelrohranordnung. Das Coriolis-Massedurchflussmessgerät kann eine oder mehrere der zuvor genannten Messrohranordnungen aufweisen.

In einer weiteren Ausgestaltung sind wenigstens zwei passive Messrohre und wenigstens eine Strömungszusammenführung vorhanden, wobei wenigstens zwei passive Messrohre durch die Strömungszusammenführung zu einem passiven Messrohr zusammengefasst sind. Dies hat den Vorteil, dass unvorteilhafte Geschwindigkeitsprofile ausgeglichen werden können.

Im Einzelnen gibt es nun eine Vielzahl von Möglichkeiten, das erfindungsgemäße Coriolis-Massedurchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Coriolis-Massedurchflussmessgeräts,
- Fig. 2: ein zweites Ausführungsbeispiel eines erfindungsgemäßen Coriolis-Massedurchflussmessgeräts,
- Fig. 3: ein drittes Ausführungsbeispiel eines erfindungsgemäßen Coriolis-Massedurchflussmessgeräts,
- Fig. 4: ein viertes Ausführungsbeispiel eines erfindungsgemäßen Coriolis-Massedurchflussmessgeräts in Seitenansicht,
- Fig. 5: ein fünftes Ausführungsbeispiel eines erfindungsgemäßen Coriolis-Massedurchflussmessgeräts in Seitenansicht,
- Fig. 6: ein sechstes Ausführungsbeispiel eines erfindungsgemäßen Coriolis-Massedurchflussmessgeräts in Seitenansicht,
- Fig. 7: ein siebtes Ausführungsbeispiel eines erfindungsgemäßen Coriolis-Massedurchflussmessgeräts in Seitenansicht,
- Fig. 8: ein achtes Ausführungsbeispiel eines erfindungsgemäßen Coriolis-Massedurchflussmessgeräts in Seitenansicht,
- Fig. 9: ein neuntes Ausführungsbeispiel eines erfindungsgemäßen Coriolis-Massedurchflussmessgeräts,
- Fig. 10: ein zehntes Ausführungsbeispiel eines erfindungsgemäßen Coriolis-Massedurchflussmessgeräts,
- Fig. 11: ein elftes Ausführungsbeispiel eines erfindungsgemäßen Coriolis-Massedurchflussmessgeräts,
- Fig. 12: ein erstes Ausführungsbeispiel eines nichterfindungsgemäßen Verfahrens.

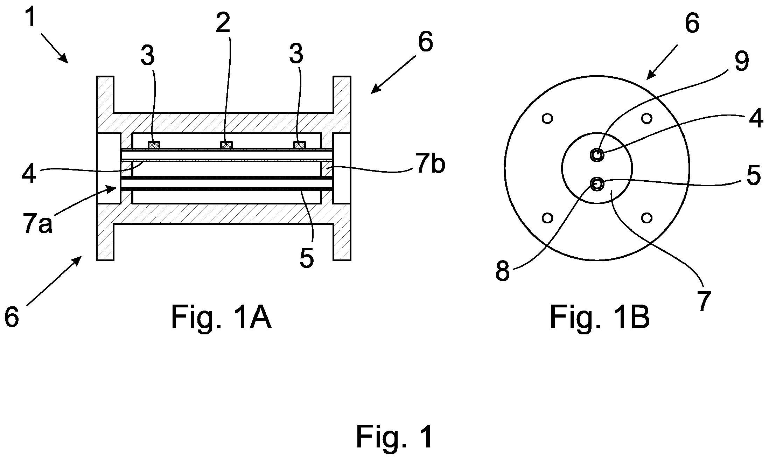

In Fig. 1 ist dargestellt ein erstes Ausführungsbeispiel eines erfindungsgemäßen Coriolis-Massedurchflussmessgeräts 1. Fig. 1A zeigt das Durchflussmessgerät 1 in Schnittdarstellung. Das dargestellte Coriolis-Massedurchflussmessgerät weist eine Flanschverbindung 6 zur Anbindung an eine externe Rohrleitung (nicht dargestellt), einen Schwingungserzeuger 2 und zwei Schwingungsaufnehmer 3 auf. Zudem weist das Coriolis-Massedurchflussmessgerät 1 ein aktives Messrohr 4 mit einer Querschnittsfläche 9 und ein passives Messrohr 5 mit einer Querschnittsfläche 8 auf, wobei der Schwingungserzeuger 2 und die Schwingungsaufnehmer 3 an dem aktiven Messrohr 4 angeordnet sind. Im dargestellten Ausführungsbeispiel weisen das aktive Messrohr 4 und das passive Messrohr 5 identische Querschnittsflächen 8, 9 auf und sind gleich lang ausgestaltet. Die Anbindung an eine hier nicht dargestellte externe Rohrleitung erfolgt über eine Flanschverbindung 6, bestehend aus einem einströmseitigen Flansch 6 und einem ausströmseitigen Flansch 6. Darüber hinaus ist einlaufseitig ein Strömungsteiler 7a vorhanden, der im Betrieb das Fluid zu gleichen Teilen auf die beiden Messrohre 4 und 5 aufteilt. Darüber hinaus ist ausströmseitig ein Strömungssammler 7b vorhanden, der im Betrieb die Fluidströmungen aus dem aktiven Messrohr 4 und dem passiven Messrohr 5 wieder zusammenführt. Im Betrieb wird nur der Durchfluss, der durch das aktive Messrohr 4 fließt, gemessen. Anschließend kann mit Hilfe eines Umrechnungsfaktors der Gesamtdurchfluss, der durch beide Messrohre fließt, bestimmt werden. Im vorliegenden Ausführungsbeispiel hat der Umrechnungsfaktor den Wert 2.

Fig. 1B zeigt das dargestellte Ausführungsbeispiel in Seitenansicht. Die Darstellung zeigt die auslaufseitige Flanschverbindung 6 sowie die getrennt voneinander ausgestalteten und angeordneten Messrohre 4 und 5.

Allen in den Figuren dargestellten Coriolis-Massedurchflussmessgeräten 1 ist gemeinsam, dass es sich um integrale Coriolis-Massedurchflussmessgeräte 1 handelt, die sich also vollständig zwischen ihren externen Anschlüssen erstrecken, also zwischen den beiden immer erforderlichen Teilen der Flanschverbindung 6, nämlich dem einströmseitigen Flansch 6 und dem ausströmseitigen Flansch 6. Solche Coriolis-Massedurchflussmessgeräte haben also in Durchströmungsrichtung betrachtet den Aufbau einströmseitiger Flansch 6, Strömungsteiler 7a, aktive und passive Messrohre 4, 5, Strömungssammler 7b, ausströmseitiger Flansch 6. Der Strömungsteiler 7a und der Strömungssammler 7b sind Ausgangs- und Endpunkte der aktiven und passiven Messrohre 4,5, also aller Messrohre 4, 5.

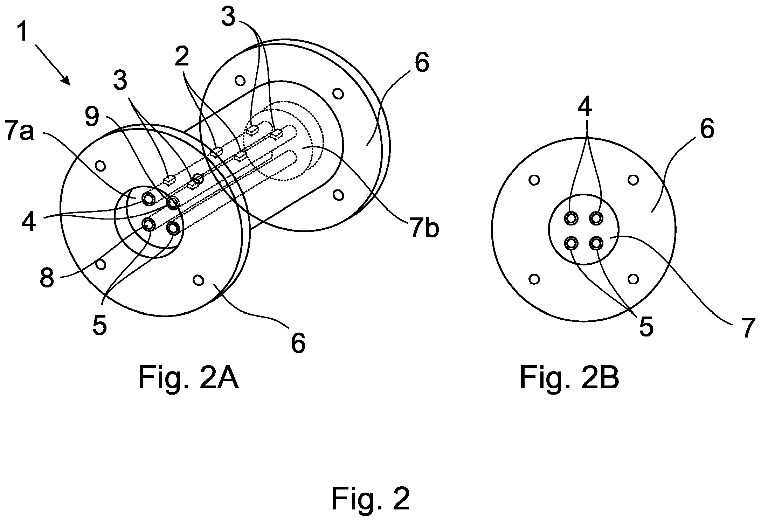

In Fig. 2 ist dargestellt ein zweites Ausführungsbeispiel eines erfindungsgemäßen Coriolis-Massedurchflussmessgeräts 1 mit zwei aktiven Messrohren 4 und zwei passiven Messrohren 5. Wie in Fig. 2A gezeigt, weist das Coriolis-Massedurchflussmessgerät 1 an jedem aktiven Messrohr 4 einen Schwingungserzeuger 2 und zwei Schwingungsaufnehmer 3 auf. Die Messrohranordnung der aktiven Messrohre 4 entspricht einer Doppelrohranordnung zur Erfassung des Durchflusses. D.h. im Betrieb werden die aktiven Messrohre 4 einander entgegengesetzt zur Schwingung angeregt. Auch in diesem Ausführungsbeispiel weisen die aktiven Messrohre 4 und die passiven Messrohre 5 identische Querschnittsflächen 8, 9 und dieselbe Länge auf. Im Betrieb wird der Durchfluss durch die aktiven Messrohre 4 gemessen. Der Umrechnungsfaktor hat vorliegend ebenfalls den Wert 2.

Fig. 2B zeigt das dargestellte Ausführungsbeispiel in der Seitenansicht. Die Darstellung zeigt die Anordnung der aktiven Messrohre 4 und der passiven Messrohre 5.

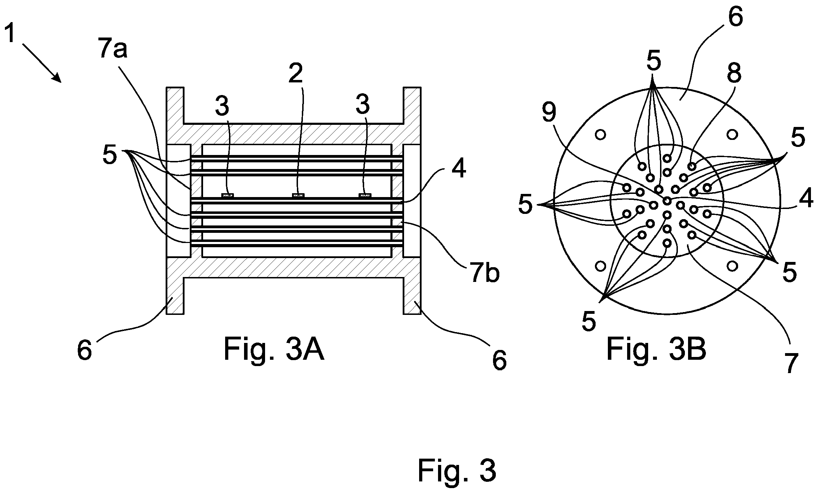

Fig. 3 zeigt ein drittes Ausführungsbeispiel eines erfindungsgemäßen Coriolis-Massedurchflussmessgeräts 1. Fig. 3A zeigt das Ausführungsbeispiel in einer Schnittansicht. In dem dargestellten Ausführungsbeispiel ist ein aktives Messrohr 4 umgeben von einer Vielzahl von passiven Messrohren 5, wobei die Querschnittsfläche 9 des aktiven Messrohrs 4 identisch ist mit den Querschnittsflächen 8 der passiven Messrohre 5. Fig. 3B zeigt das Ausführungsbeispiel in der Seitenansicht. Der Darstellung ist zu entnehmen, dass 25 passive Messrohre 5 vorhanden sind, die um das aktive Messrohr 4 herum angeordnet sind. Aufgrund der identischen geometrischen Ausgestaltung des aktiven Messrohrs 4 mit den passiven Messrohren 5 beträgt der Umrechnungsfaktor zur Berechnung des Gesamtdurchflusses 25.

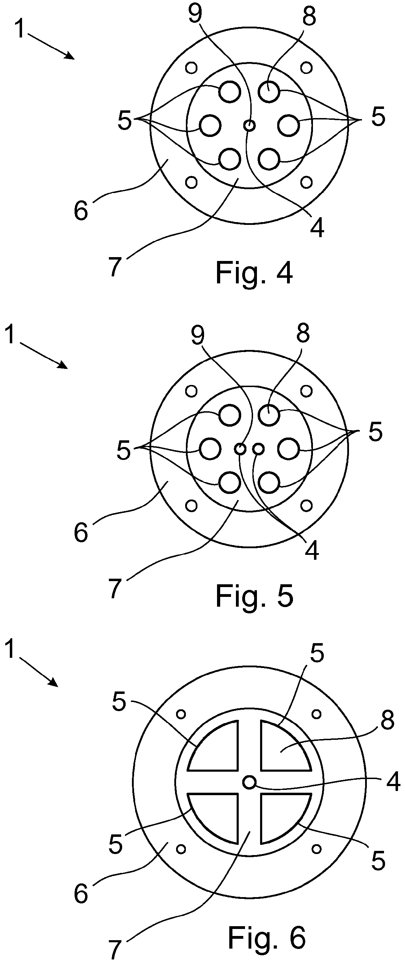

Fig. 4 zeigt in Seitenansicht ein weiteres, viertes Ausführungsbeispiel eines Coriolis-Massedurchflussmessgeräts 1. Das dargestellte Ausführungsbeispiel weist ein aktives Messrohr 4 und sechs passive Messrohre 5 auf. Dabei ist die Querschnittsfläche 8 der passiven Messrohre 5 größer, im Detail um den Faktor 4, als die Querschnittsfläche 9 des aktiven Messrohrs 4.

Fig. 5 zeigt in Seitenansicht ein fünftes Ausführungsbeispiel eines Coriolis-Massedurchflussmessgeräts 1. Das dargestellte Ausführungsbeispiel weist zwei aktive Messrohre 4 und sechs passive Messrohre 5 auf. Die Messrohranordnung der aktiven Messrohre 4 ist eine Doppelrohranordnung. Die Querschnittsfläche 8 der passiven Messrohre 5 ist um den Faktor 4 größer als die Querschnittsfläche 9 der aktiven Messrohre 4.

In Fig. 6 ist in Seitenansicht ein sechstes Ausführungsbeispiel eines Coriolis-Massedurchflussmessgeräts 1 dargestellt. In dem dargestellten Ausführungsbeispiel ist ein aktives Messrohr 4 vorhanden, das von vier passiven Messrohren 5 umgeben ist. Im Unterschied zu den zuvor dargestellten Ausführungsbeispielen ist die Form des Querschnitts der passiven Messrohre 5 nicht kreisförmig, sondern die Querschnittsfläche 8 hat die Form eines Viertelkreises.

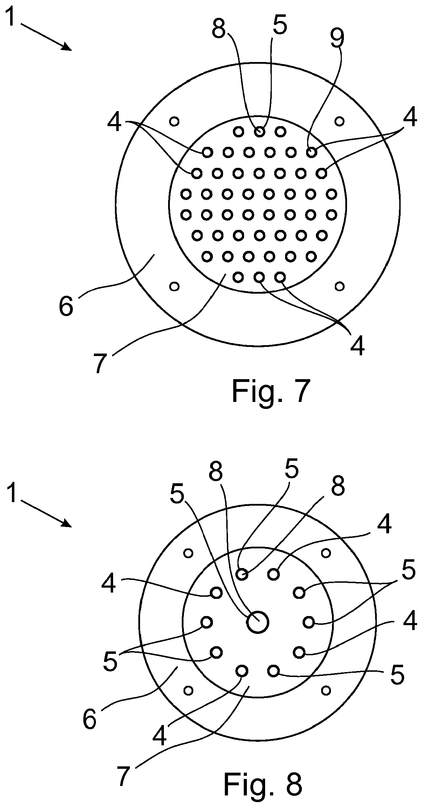

In Fig. 7 ist ein siebtes Ausführungsbeispiel eines Coriolis-Massedurchflussmessgeräts 1 in Seitenansicht dargestellt. Das dargestellte Coriolis-Massedurchflussmessgerät 1 weist sechs aktive Messrohre 4 in drei Doppelrohranordnungen und 42 passive Messrohre 5 auf. Die Querschnittsfläche 8 der passiven Messrohre 5 ist identisch mit der Querschnittsfläche 9 der aktiven Messrohre 4. Die Summe der einzelnen Querschnittsflächen 9 der aktiven Messrohre 4 definiert einen ersten Gesamtquerschnitt und die Summe der Querschnittsflächen 8 der passiven Messrohre 5 definieren einen zweiten Gesamtquerschnitt. Im dargestellten Ausführungsbeispiel ist der zweite Gesamtquerschnitt um ein ganzzahliges Vielfaches, nämlich um den Faktor 7, größer als der erste Gesamtquerschnitt. Folglich hat der Umrechnungsfaktor zur Berechnung des Gesamtdurchflusses im vorliegenden Fall den Wert 7.

Fig. 8 zeigt ein achtes Ausführungsbeispiel eines Coriolis-Massedurchflussmessgeräts 1 in Seitenansicht. Das Durchflussmessgerät 1 weist 4 aktive Messrohre 4 und sieben passive Messrohre 5 auf. Im Unterschied zu den bisher dargestellten Ausführungsbeispielen weisen die passiven Messrohre 5 nicht alle dieselbe Größe der Querschnittsfläche 8 auf. Zentral im Durchflussmessgerät 1 ist ein passives Messrohr 5 angeordnet, dass einen größeren Durchmesser als die übrigen aktiven Messrohre 4 und passiven Messrohre 5 aufweist. In dem dargestellten Ausführungsbeispiel sind die Querschnittsflächen 8 der übrigen passiven Messrohre 5 mit den Querschnittsflächen 9 der aktiven Messrohre 4 identisch. Die Querschnittsfläche 8 des zentralen passiven Messrohrs 5 ist um ein ganzzahliges Vielfaches größer als die Querschnittsflächen 8 der übrigen passiven Messrohre 5.

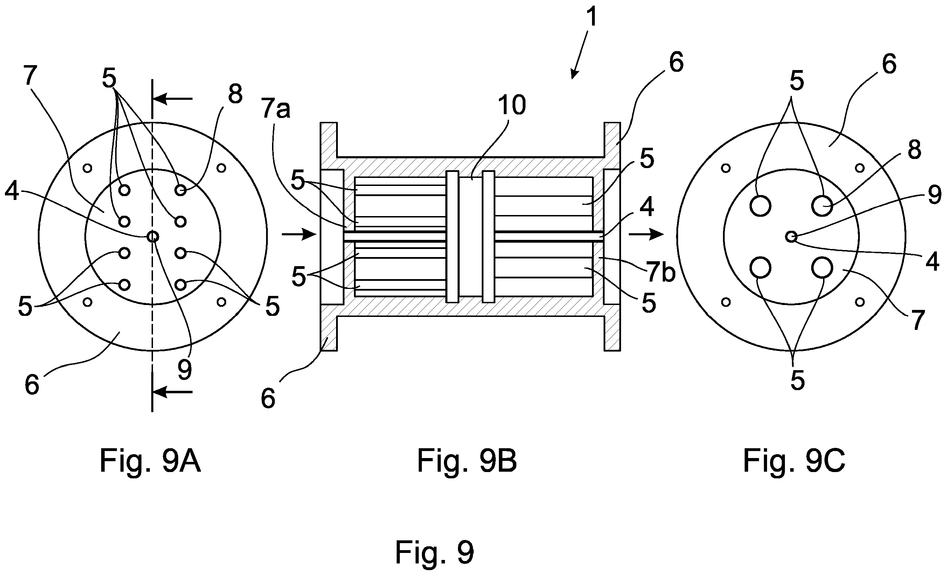

In Fig. 9 ist ein neuntes Ausführungsbeispiel eines Coriolis-Massedurchflussmessgeräts 1 dargestellt. Fig. 9B zeigt das Durchflussmessgerät 1 in Schnittdarstellung. Durch die Pfeile ist die Strömungsrichtung des Fluids angedeutet. Das Durchflussmessgerät 1 weist ein aktives Messrohr 4 und mehrere passive Messrohre 5 auf. Darüber hinaus ist in der Mitte des Durchflussmessgeräts 1 eine Strömungszusammenführung 10 vorhanden, die jeweils zwei passive Messrohre 5 zu einem passiven Messrohr 5 verbindet.

Fig. 9A zeigt die einlaufseitige Seitenansicht des Durchflussmessgeräts 1. In der Darstellung ist zentral ein aktives Messrohr 4 angeordnet, dass von sechs passiven Messrohren 5 umgeben ist. Alle aktiven Messrohre 4 und passiven Messrohre 5 weisen eine identische Querschnittsfläche 8, 9 auf. Fig. 9C zeigt die auslaufseitige Seitenansicht des Durchflussmessgeräts 1. In der Darstellung ist zentral ein aktives Messrohr 4 vorhanden, dass von vier passiven Messrohren 5 umgeben ist. Dabei ist die Querschnittsfläche 8 jedes passiven Messrohrs 5 doppelt so groß wie die Querschnittsfläche 9 des aktiven Messrohrs 4.

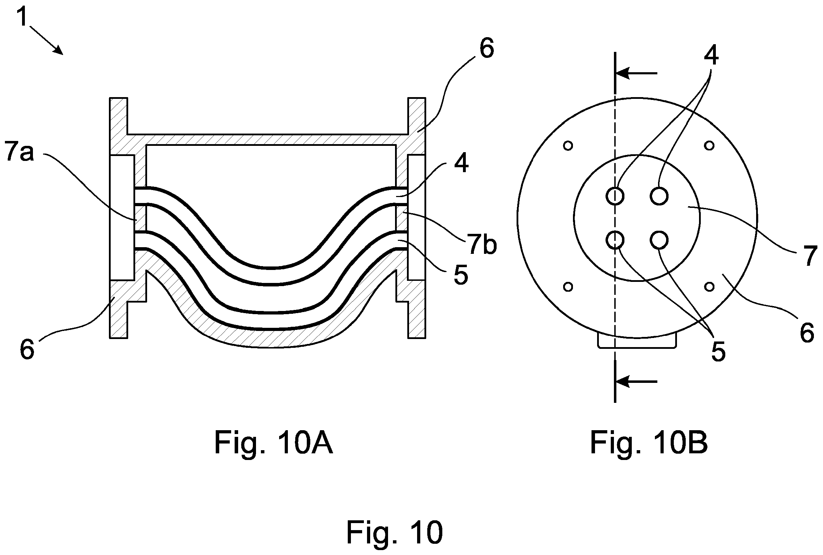

Fig. 10 zeigt ein zehntes Ausführungsbeispiel eines Coriolis-Massedurchflussmessgeräts 1. Fig. 10A zeigt eine Schnittdarstellung des Durchflussmessgeräts 1. Das Durchflussmessgerät 1 weist zwei aktive Messrohre 4 und zwei passive Messrohre 5 auf. Dabei sind sowohl die aktiven Messrohre 4 als auch die passiven Messrohre 5 u-förmig gebogen ausgestaltet. Fig. 10B zeigt das Ausführungsbeispiel in der Seitenansicht.

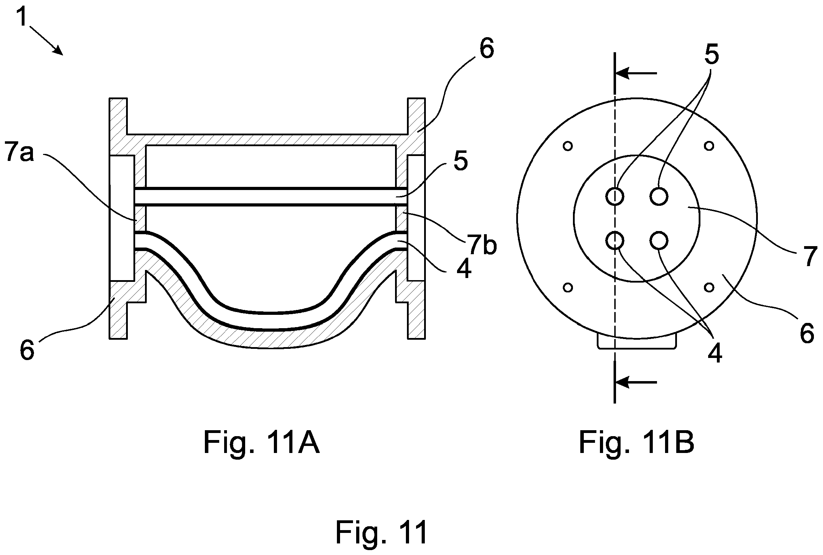

In Fig. 11 ist ein elftes Ausführungsbeispiel eines Coriolis-Massedurchflussmessgeräts 1 mit zwei aktiven Messrohren 4 und zwei passiven Messrohren 5 dargestellt. Die passiven Messrohre 5 sind gerade ausgestaltet, während die aktiven Messrohre 4 u-förmig gebogen sind.

Alle dargestellten Ausführungsbeispiele des Coriolis-Massedurchflussmessgeräts 1 weisen den Vorteil auf, dass die Länge der Messrohre aufgrund deren geringer Durchmesser besonders kurz ausgestaltet sein kann. Dadurch kann der Installationsaufwand erheblich minimiert werden.

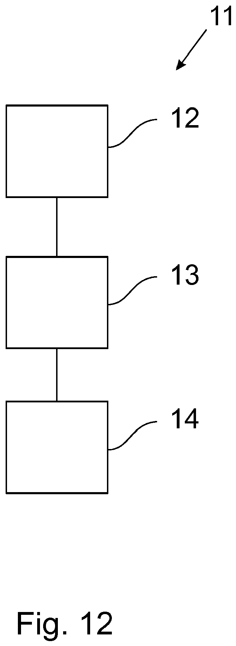

Fig. 12 zeigt ein erstes Ausführungsbeispiel eines nichterfindungsgemäßen Verfahrens 11 zum Betreiben eines Coriolis-Massedurchflussmessgeräts 1, wobei das Coriolis-Massedurchflussmessgerät 1 wenigstens zwei Messrohre 4 und 5 und wenigstens einen Strömungsteiler 7a aufweist, wobei der Strömungsteiler 7 in Strömungsrichtung vor den wenigstens zwei Messrohren 4 und 5 angeordnet ist. In einem ersten Schritt 12 des nichterfindungsgemäßen Verfahrens wird das zu vermessende Fluid durch den Strömungsteiler 7a in wenigstens zwei Teilströme aufgeteilt, die durch die wenigstens zwei Messrohre 4 und 5 fließen. Anschließend wird in einem nächsten Schritt 13 der Teildurchfluss des Fluids, der durch wenigstens ein Messrohr 4 fließt, erfasst. Anschließend wird in einem nächstem Schritt 14 mit Hilfe eines Umrechnungsfaktors aus dem gemessenen Teilmassedurchfluss der Gesamtmassedurchfluss des Fluids durch das Coriolis-Massedurchflussmessgerät bestimmt.

### Bezugszeichen

- 1: Coriolis-Massedurchflussmessgerät
- 2: Schwingungserzeuger
- 3: Schwingungsaufnehmer
- 4: aktives Messrohr
- 5: passives Messrohr
- 6: Flanschverbindung
- 7: Strömungsteiler (7a), Strömungssammler (7b)
- 8: Querschnittsfläche des passiven Messrohrs
- 9: Querschnittsfläche des aktiven Messrohrs
- 10: Strömungszusammenführer
- 11: Verfahren zum Betreiben eines Coriolis-Massedurchflussmessgeräts
- 12: Aufteilung des Fluidstroms in wenigstens zwei Teilströme
- 13: Erfassen eines Teildurchflusses
- 14: Bestimmung des Gesamtdurchflusses

## Patentansprüche

1. Coriolis-Massedurchflussmessgerät (1) zur Bestimmung des Massedurchflusses eines Fluids, mit einer Flanschverbindung (6) umfassend einen einströmseitigen Flansch und einen ausströmseitigen Flansch zur Anbindung an eine externe Rohrleitung, mit wenigstens einem Schwingungserzeuger (2), mit wenigstens zwei Schwingungsaufnehmern (3), mit wenigstens zwei Messrohren (4, 5), mit wenigstens einem Strömungsteiler (7a), wobei der Strömungsteiler (7a) in Strömungsrichtung vor den wenigstens zwei Messrohren (4, 5) angeordnet ist und mit wenigstens einem Strömungssammler (7b), wobei der Strömungssammler (7b) in Strömungsrichtung hinter den wenigstens zwei Messrohren (4, 5) angeordnet ist, wobei sich das Coriolis-Massedurchflussmessgerät (1) vollständig zwischen seinem einströmseitigen Flansch (6) und seinem ausströmseitigen Flansch (6) erstreckt und in Strömungsrichtung gesehen den Aufbau einströmseitiger Flansch (6), Strömungsteiler (7a), Messrohre (4, 5), Strömungssammler (7b), ausströmseitiger Flansch (6) hat,
wobei wenigstens ein aktives Messrohr (4) und wenigstens ein passives Messrohr (5) vorhanden sind, wobei das wenigstens eine aktive Messrohr (4) und das wenigstens eine passive Messrohr (5) getrennt voneinander ausgestaltet und angeordnet sind, sodass das zu vermessende Fluid innerhalb des Coriolis-Massedurchflussmessgeräts (1) in unabhängige Teilströme aufgeteilt wird, wobei sich die einzelnen Teilströme aufgrund der separaten Ausgestaltung des aktiven Messrohrs (4) und des passiven Messrohrs (5) nicht beeinflussen, und wobei der wenigstens eine Schwingungserzeuger (2) und die wenigstens zwei Schwingungsaufnehmer (3) an dem wenigstens einen aktiven Messrohr (4) angeordnet sind.

2. Coriolis-Massedurchflussmessgerät (1) nach Anspruch 1, **dadurch gekennzeichnet, dass** das wenigstens eine aktive Messrohr (4) und das wenigstens eine passive Messrohr (5) die gleiche Länge aufweisen.

3. Coriolis-Massedurchflussmessgerät (1) nach Anspruch 1 oder 2, **dadurch gekennzeichnet, dass** die Anzahl der aktiven Messrohre (4) der Anzahl der passiven Messrohre (5) entspricht.

4. Coriolis-Massedurchflussmessgerät (1) nach Anspruch 1 oder 2, **dadurch gekennzeichnet, dass** die Anzahl der passiven Messrohre (5) einem ganzzahligen Vielfachen der Anzahl der aktiven Messrohre (4) entspricht.

5. Coriolis-Massedurchflussmessgerät (1) nach einem der Ansprüche 1 bis 4, **dadurch gekennzeichnet, dass** das wenigstens eine aktive Messrohr (4) und das wenigstens eine passive Messrohr (5) jeweils eine Querschnittsfläche (8, 9) aufweisen, wobei die Querschnittsfläche (8) des passiven Messrohrs (5) identisch ist mit der Querschnittsfläche (6) des aktiven Messrohrs (4).

6. Coriolis-Massedurchflussmessgerät (1) nach einem der Ansprüche 1 bis 5, **dadurch gekennzeichnet, dass** das wenigstens eine aktive Messrohr (4) und das wenigstens eine passive Messrohr (5) jeweils eine Querschnittsfläche (8, 9) aufweisen, wobei die Querschnittsfläche (8) des passiven Messrohrs (5) verschieden ist von der Querschnittsfläche (9) des aktiven Messrohrs (4).

7. Coriolis-Massedurchflussmessgerät (1) nach einem der Ansprüche 1 bis 6, **dadurch gekennzeichnet, dass** das wenigstens eine aktive Messrohr (4) und wenigstens zwei passive Messrohre (5) vorhanden sind, wobei jedes aktive Messrohr (4) und jedes passive Messrohr (5) eine Querschnittsfläche (8, 9) aufweisen, wobei die Summe der Querschnittsflächen (9) des bzw. der aktiven Messrohre (4) einen ersten Gesamtquerschnitt definiert und wobei die Summe der Querschnittsflächen (8) der passiven Messrohre (5) einen zweiten Gesamtquerschnitt definiert, wobei der zweite Gesamtquerschnitt einem ganzzahligen Vielfachen des ersten Gesamtquerschnitts entspricht.

8. Coriolis-Massedurchflussmessgerät (1) nach einem der Ansprüche 1 bis 7, **dadurch gekennzeichnet, dass** das wenigstens eine aktive Messrohr (4) und das wenigstens eine passive Messrohr (5) jeweils eine Querschnittsfläche (8, 9) aufweisen, wobei die Querschnittsfläche (9) des aktiven Messrohrs (4) und/oder die Querschnittsfläche (8) des passiven Messrohrs (5) kreisförmig oder oval oder dreieckig oder viereckig ist oder die Form eines Kreisausschnittes oder eines Kreissegments aufweist.

9. Coriolis-Massedurchflussmessgerät (1) nach einem der Ansprüche 1 bis 8, **dadurch gekennzeichnet, dass** das wenigstens eine aktive Messrohr (4) und das wenigstens eine passive Messrohr (5) gerade oder gebogen, vorzugsweise u-förmig gebogen, ausgebildet sind.

10. Coriolis-Massedurchflussmessgerät (1) nach einem der Ansprüche 1 bis 9, **dadurch gekennzeichnet, dass** das wenigstens eine aktive Messrohr (4) gebogen, vorzugsweise u-förmig gebogen, und das wenigstens eine passive Messrohr (5) gerade ausgestaltet ist.

11. Coriolis-Massedurchflussmessgerät (1) nach einem der Ansprüche 1 bis 10, **dadurch gekennzeichnet, dass** wenigstens zwei passive Messrohre (5) vorhanden sind und dass wenigstens eine Strömungszusammenführung (10) vorhanden ist, wobei wenigstens zwei passive Messrohre (5) durch die Strömungszusammenführung (10) zu einem passiven Messrohr (5) zusammengefasst sind.

## Claims

1. Coriolis mass flowmeter (1) for determining the mass flow of a fluid with a flange connection (6) comprising an inflow side flange and an outflow side flange for connection to an external pipeline, with at least one oscillation generator (2), with at least two oscillation sensors (3), with at least two measuring tubes (4, 5), with at least one flow divider (7a), wherein the flow divider (7a) is arranged upstream of the at least two measuring tubes (4, 5) in the direction of flow, and with at least one flow collector (7b), wherein the flow collector (7b) is arranged downstream of the at least two measuring tubes (4, 5), wherein the Coriolis mass flowmeter (1) extends completely between its inflow flange (6) and outflow flange (6) and, as seen in the direction flow has the construction inflow flange (6), flow divider (7a), measuring tube (4, 5), flow collector (7b), outflow flange (6),
wherein at least an active measuring tube (4) and at least a passive measuring tube (5) are provided, wherein the at least one active measuring tube (4) and the at least one passive measuring tube (5) are designed and arranged separately from one another so that the fluid to be measured within the Coriolis mass flowmeter (1) is separated into independent partial flows, wherein the individual partial flows do not influence the active measuring tube (4) and the passive measuring tube (5) due to the separate design, and wherein the at least one oscillation generator (2) and the at least two oscillation sensors (3) are arranged on the at least one active measuring tube (4).

2. Coriolis mass flowmeter (1) according to claim 1, **characterized in that** the at least one active measuring tube (4) and the at least one passive measuring tube (5) have the same length.

3. Coriolis mass flowmeter (1) according to claim 1 or 2, **characterized in that** the number of active measuring tubes (4) corresponds to the number of passive measuring tubes (5).

4. Coriolis mass flowmeter (1) according to claim 1 or 2, **characterized in that** the number of passive measuring tubes (5) corresponds to integer multiples of the number of active measuring tubes (4).

5. Coriolis mass flowmeter (1) according to any one of claims 1 to 4, **characterized in that** the at least one active measuring tube (4) and the at least one passive measuring tube (5) each have a cross section surface (8, 9), wherein the cross section surface (8) of the passive measuring tube (5) is identical to the cross section surface (9) of the active measuring tube (4).

6. Coriolis mass flowmeter (1) according to any one of claims 1 to 5, **characterized in that** the at least one active measuring tube (4) and the at least one passive measuring tube (5) each have a cross section surface (8, 9), wherein the cross section surface (8) of the passive measuring tube (5) is different from the cross section surface (9) of the active measuring tube (4).

7. Coriolis mass flowmeter (1) according to any one of claims 1 to 6, **characterized in that** at least one active measuring tube (4) and at least two passive measuring tubes (5) are provided, wherein each active measuring tube (4) and each passive measuring tube (5) has a cross section surface (8, 9), wherein the sum of the cross section surfaces (9) of the active measuring tube or tubes (4) defines a first overall cross section and wherein the sum of the cross section surfaces (8) of the passive measuring tubes (5) define a second overall cross section, wherein the second overall cross section corresponds to an integer multiple of the first overall cross section.

8. Coriolis mass flowmeter (1) according to any one of claims 1 to 7, **characterized in that** the at least one active measuring tube (4) and the at least one passive measuring tube (5) each have a cross section surface (8, 9), wherein the cross section surface (9) of the active measuring tube (4) and/or the cross section surface (8) of the passive measuring tube (5) is circular or oval or triangular or rectangular, or has the shape of a circle segment or a circle sector.

9. Coriolis mass flowmeter (1) according to any one of claims 1 to 8, **characterized in that** the at least one active measuring tube (4) and the at least one passive measuring tube (5) are straight or curved, preferably curved in a u-shape.

10. Coriolis mass flowmeter (1) according to any one of claims 1 to 9, **characterized in that** the at least one active measuring tube (4) is curved, preferably curved in a u-shape, and that at least one passive measuring tube (5) is straight.

11. Coriolis mass flowmeter (1) according to any one of claims 1 to 10, **characterized in that** at least two passive measuring tubes (5) are provided and that at least one flow merger (10) is provided, wherein at least two passive measuring tubes (5) are merged into one passive measuring tube (5).

## Revendications

1. Débitmètre massique de Coriolis (1) pour la détermination du débit massique d'un fluide, muni d'une liaison à brides (6) comprenant une bride côté entrée et une bride côté sortie pour le rattachement à une canalisation externe, muni d'au moins un générateur d'oscillations (2), muni d'au moins deux capteurs d'oscillations (3), muni d'au moins deux tubes de mesure (4, 5), muni d'au moins un diviseur d'écoulement (7a), le diviseur d'écoulement (7a) étant agencé dans la direction d'écoulement avant les au moins deux tubes de mesure (4, 5), et muni d'au moins un collecteur d'écoulement (7b), le collecteur d'écoulement (7b) étant agencé dans la direction d'écoulement après les au moins deux tubes de mesure (4, 5), le débitmètre massique de Coriolis (1) s'étendant entièrement entre sa bride côté entrée (6) et sa bride côté sortie (6), et ayant, tel que vu dans la direction d'écoulement, la structure bride côté entrée (6), diviseur d'écoulement (7a), tubes de mesure (4, 5), collecteur d'écoulement (7b), bride côté sortie (6),
au moins un tube de mesure actif (4) et au moins un tube de mesure passif (5) étant présents, l'au moins un tube de mesure actif (4) et l'au moins un tube de mesure passif (5) étant configurés et agencés séparément l'un de l'autre, de telle sorte que le fluide à mesurer soit divisé en courants partiels indépendants à l'intérieur du débitmètre massique de Coriolis (1), les courants partiels individuels ne s'influençant pas en raison de la configuration séparée du tube de mesure actif (4) et du tube de mesure passif (5), et
l'au moins un générateur d'oscillations (2) et les au moins deux capteurs d'oscillations (3) étant agencés sur l'au moins un tube de mesure actif (4).

2. Débitmètre massique de Coriolis (1) selon la revendication 1, **caractérisé en ce que** l'au moins un tube de mesure actif (4) et l'au moins un tube de mesure passif (5) présentent la même longueur.

3. Débitmètre massique de Coriolis (1) selon la revendication 1 ou 2, **caractérisé en ce que** le nombre de tubes de mesure actifs (4) correspond au nombre de tubes de mesure passifs (5).

4. Débitmètre massique de Coriolis (1) selon la revendication 1 ou 2, **caractérisé en ce que** le nombre de tubes de mesure passifs (5) correspond à un multiple entier du nombre de tubes de mesure actifs (4).

5. Débitmètre massique de Coriolis (1) selon l'une quelconque des revendications 1 à 4, **caractérisé en ce que** l'au moins un tube de mesure actif (4) et l'au moins un tube de mesure passif (5) présentent chacun une surface de section transversale (8, 9), la surface de section transversale (8) du tube de mesure passif (5) étant identique à la surface de section transversale (6) du tube de mesure actif (4).

6. Débitmètre massique de Coriolis (1) selon l'une quelconque des revendications 1 à 5, **caractérisé en ce que** l'au moins un tube de mesure actif (4) et l'au moins un tube de mesure passif (5) présentent chacun une surface de section transversale (8, 9), la surface de section transversale (8) du tube de mesure passif (5) étant différente de la surface de section transversale (9) du tube de mesure actif (4).

7. Débitmètre massique de Coriolis (1) selon l'une quelconque des revendications 1 à 6, **caractérisé en ce que** l'au moins un tube de mesure actif (4) et au moins deux tubes de mesure passifs (5) sont présents, chaque tube de mesure actif (4) et chaque tube de mesure passif (5) présentant une surface de section transversale (8, 9), la somme des surfaces de section transversale (9) du ou des tubes de mesure actifs (4) définissant une première section transversale totale et la somme des surfaces de section transversale (8) des tubes de mesure passifs (5) définissant une deuxième section transversale totale, la deuxième section transversale totale correspondant à un multiple entier de la première section transversale totale.

8. Débitmètre massique de Coriolis (1) selon l'une quelconque des revendications 1 à 7, **caractérisé en ce que** l'au moins un tube de mesure actif (4) et l'au moins un tube de mesure passif (5) présentent chacun une surface de section transversale (8, 9), la surface de section transversale (9) du tube de mesure actif (4) et/ou la surface de section transversale (8) du tube de mesure passif (5) étant circulaire ou ovale ou triangulaire ou quadrangulaire, ou présentant la forme d'un arc de cercle ou d'un segment de cercle.

9. Débitmètre massique de Coriolis (1) selon l'une quelconque des revendications 1 à 8, **caractérisé en ce que** l'au moins un tube de mesure actif (4) et l'au moins un tube de mesure passif (5) sont conçus droits ou incurvés, de préférence incurvés en forme de U.

10. Débitmètre massique de Coriolis (1) selon l'une quelconque des revendications 1 à 9, **caractérisé en ce que** l'au moins un tube de mesure actif (4) est configuré incurvé, de préférence incurvé en forme de U, et l'au moins un tube de mesure passif (5) est configuré droit.

11. Débitmètre massique de Coriolis (1) selon l'une quelconque des revendications 1 à 10, **caractérisé en ce qu'**au moins deux tubes de mesure passifs (5) sont présents et **en ce qu'**au moins un regroupement d'écoulement (10) est présent, au moins deux tubes de mesure passifs (5) étant rassemblés par le regroupement d'écoulement (10) en un tube de mesure passif (5).
